# EUROPÄISCHE PATENTSCHRIFT

(11) **EP 2 213 157 B1**
(45) Veröffentlichungstag und Bekanntmachung des Hinweises auf die Patenterteilung: **23.05.2012**
(21) Anmeldenummer: 09180655.4
(22) Anmeldetag: 23.12.2009
(51) Int. Cl.: A01G 9/02, A01G 27/04

(54) **Verfahren und Vorrichtung zur Bewässerung von Pflanzen**
Method and device for watering plants
Procédé et dispositif d'arrosage de plantes

(30) Priorität: 29.01.2009 DE 102009003401
(43) Veröffentlichungstag der Anmeldung: 04.08.2010
(73) Patentinhaber: Kahler Transportgeräte e.K., 89290 Buch (DE)
(72) Erfinder: Kahler, Reinhard, 89073, Ulm (DE)
(74) Vertreter: Hentrich, Swen

(56) Entgegenhaltungen:
- EP-A1- 0 400 421
- WO-A1-00/25573
- CH-A- 403 385
- GB-A- 2 281 182
- US-A- 4 428 151

## Beschreibung

Die Erfindung ist gebildet durch ein Verfahren zur Bewässerung mindestens einer in einem Gefäß bereitgestellten Pflanze, bei dem in einen Bodentank mindestens ein Docht gelegt und durch mindestens eine Öffnung einer den Bodentank abdeckenden Platte nach oben auf die Platte geführt und dort ausgelegt wird, bei dem auf den Docht und die Platte eine Matte großer Kapillarität gelegt wird und auf die Matte die zur bewässernde Pflanze gestellt wird.

Die Erfindung betrifft weiterhin eine Vorrichtung zur Durchführung des vorstehenden Verfahrens mit einer einen Bodentank abdeckenden Platte mit mindestens einer Öffnung, durch die ein Docht in den Bodentank geführt ist, der mindestens auf der Platte ausgelegt und mit einer Matte großer Kapillarität bedeckt ist.

Ein Verfahren und eine Vorrichtung der eingangs genannten Art sind aus der GB 2 281 182 A bekannt. Hier ist ein rechteckiger Bodentank gezeigt, der mit einer Platte mit Schlitzen, durch welche Dochte geführt sind, abgedeckt ist. Die auf der Platte liegenden Dochte sind mit einer Matte großer Kapillarität bedeckt. Auf diese Matte ist eine weitere perforierte wasserundurchlässige Plane zum Schutz vor übermäßiger Verdampfung von Wasser angeordnet. Hierbei ist allerdings nachteilhaft, dass ausschließlich eine Kapillarbewässerung von Topfpflanzen ermöglicht ist.

In der täglichen Praxis werden häufig Pflanzen aus Anzuchtbetrieben und Gärtnereien aus den dort zur Verfügung stehenden Gewächshäusern mit einer professionellen Bewässerung an Händler, insbesondere auch an Verbrauchermärkte ausgeliefert, in denen eine Versorgung der Pflanzen erfolgen muss, bis diese verkauft werden. Da in den Verbrauchermärkten keine Gärtner zur fachgerechten Versorgung der Pflanzen zur Verfügung stehen, muss die Versorgung der Pflanzen möglichst einfach erfolgen können, so dass die in Gärtnereien eingesetzten Bewässerungsmethoden, nämlich durch Tropfschläuche und Tropfer oder die Anstaubewässerung oder der Einsatz von Fließrinnen nicht möglich ist.

Der Erfindung liegt daher die Aufgabe zugrunde, ein Verfahren bereitzustellen, mit dem auf einfache Weise unterschiedliche Bewässerungsmethoden verwendet und Fehler bei der richtigen Bewässerung von Pflanzen vermieden werden können. Aufgabe der Erfindung ist es weiterhin, eine geeignete Vorrichtung zur Durchführung des Verfahrens bereitzustellen.

Der das Verfahren betreffende Teil der Erfindung wird dadurch gelöst, dass der Bodentank einer Wanne zugeordnet ist, welche einschließlich des Bodentanks zur anfänglichen Anstaubewässerung mit Wasser gefüllt und nach einer Zeitdauer zur Durchfeuchtung durch einen verschließbaren ersten Wasserablauf außerhalb des Bodentanks für den Übergang zur Kapillarbewässerung entleert wird.

Damit ist der große Vorteil verbunden, dass die Wanne in einfacher Weise beispielsweise mittels eines Schlauches befüllt werden kann, wobei sich zunächst der Bodentank und dann der Bereich oberhalb des Bodentankes füllt. Ein genaues Befüllen der Wanne durch eine Tanköffnung ist nicht erforderlich. Bei einer entsprechend befüllten Wanne werden die Pflanzen zunächst Im Anstauverfahren ausgiebig mit Wasser versorgt, während nach ausreichender Durchfeuchtung des in dem Gefäß bereitgestellten Erdreiches von der Anstaubewässerung auf die Kapillarbewässerung gewechselt werden kann, die eine langandauernde und nachhaltige Versorgung mit Wasser gewährleistet, ohne die Gefahr einer Wurzelfäule zu bieten. Mit diesem neuen erfindungsgemäßen Verfahren ist gegenüber der bisher im Bereich der Verbrauchermärkte verwendeten isolierten Kapillarbewässerungsmethode vermieden, dass die Pflanzen Wassermangel erleiden, da bei sehr trockenem Erdreich es verhältnisnmäßig lange dauert, bis die Pflanze anfängt, Wasser anzusaugen, so dass in dieser Zeitspanne die Pflanze nicht versorgt ist und ein Kunde eine trockene Pflanze erwerben kann, die damit nicht die gewünschte Qualität aufweist.

Im Rahmen der Erfindung ist es weiterhin vorgesehen, dass nach der Entleerung des Wassers durch den ersten Wasserablauf dem im Bodentank befindlichen Wasser Dünger zugesetzt wird, beispielsweise mittels einer durch die Öffnung reichenden Spritze mit einem Düngerkonzentrat. Dieser zusätzliche Verfahrensschritt gewährleistet, dass der hochwertige Dünger dem in der Wanne bereitgestellten Wasser erst dann zugesetzt wird, wenn dass für die Anstaubewässerung erforderliche Wasser sich nicht mehr in der Wanne befindet und allein der Bodentank noch Wasser für die Kapillarbewässerung enthält, also der Dünger nicht mit dem überschüssigen Wasser durch den ersten Wasserablauf verloren geht.

Vorteilhaft ist es weiterhin, wenn das durch Kapillarkräfte aus dem Bodentank gesaugte Wasser ohne eine erneute Befüllung der Wanne oberhalb der Platte ersetzt wird, also Wasser nur unmittelbar dem Bodentank zugesetzt wird, um so im Prinzip eine zeitlich nicht begrenzte Bewässerung der Pflanzen gewährleisten zu können.

Der die Vorrichtung betreffende Teil der Aufgabe wird dadurch gelöst, dass der Bodentank in einer einen Wannenboden und einen Wannenrand aufweisenden Wanne mit einem den Bodentank begrenzenden Zwischenboden ausgebildet ist, dass die Platte auf den Zwischenboden aufgelegt und der Docht gegebenenfalls auf dem Zwischenboden ausgelegt ist, und dass zur Entwässerung der Wanne oberhalb des Zwischenbodens ein verschließbarer erster Wasserablauf vorgesehen ist.

Diese Vorrichtung zeichnet sich dadurch aus, dass trotz der zusätzlich geforderten Funktionalität für die Wanne diese eine relativ einfache Struktur behält, so dass es insbesondere möglich ist, die Wanne aus einem Kunststoff zu bilden und diesen im Tiefziehverfahren unter Verwendung geeigneter Stempel zu formen. Aber auch bei der Fertigung aus Blech bietet die einfache Struktur bei der Fertigung an Abkaufmaschinen oder als Schweißteil.

Als vorteilhaft hat es sich dabei gezeigt, wenn der Bodentank durch sich zum Zwischenboden erstreckende Seitenwände begrenzt ist, da so in der Wanne nicht lediglich zwei unterschiedliche Niveaus bereitgestellt werden, sondern der Bodentank ein in sich hinsichtlich des Tankbodens und der Seitenwände geschlossenes Behältnis darstellt. Dadurch ergibt sich dann auch die Möglichkeit, dass der erste Wasserablauf im Zwischenboden ausgebildet ist, da der Bereich unterhalb des Zwischenbodens außerhalb des Bodentanks liegt und damit eine Entwässerung des Volumens oberhalb des Zwischenbodens durch diesen ersten Wasserablauf erfolgen kann, ohne den Wasserspiegel auch im Bodentank abzusenken. Mit dieser Gestaltung bietet sich auch die Möglichkeit, dass der Zwischenboden zugleich auch den Wannenboden bildet, was Material einspart und wiederum Vorteile bietet, wenn die erfindungsgemäße Vorrichtung durch Tiefziehen gefertigt werden soll.

Um eine plane Stellfläche für die Gefäße der Pflanzen bereitzustellen, weisen für einen bündigen Übergang von der Platte zu dem Seitenboden die Seitenwände eine der Dicke der Platte entsprechende Stufe auf. Weiterhin ist es vorteilhaft, wenn den Seitenwänden Flutungskanäle für die Befüllung des Bodentanks zugeordnet sind, um so für die Befüllung des Bodentanks nicht ausschließlich auf die in der Platte ausgebildete Öffnung angewiesen zu sein. Einer höheren Belastbarkeit der Platte und des Zwischenbodens dient auch, dass im Bodentank mindestens eine Stützsäule angeordnet ist.

Im Rahmen der Erfindung ist weiterhin vorgesehen, dass im Bodentank ein verschließbarer zweiter Wasserablauf ausgebildet ist, so dass in einfacher Weise auch der Bodentank geleert werden kann für einen gegebenenfalls gewünschten Wasseraustausch oder für einen Transport der Wanne. Um auch bei der Kapillarbewässerung ein Vertrocknen der Pflanzen zu vermeiden, ist dem Bodentank ein Wasserstandsanzeiger zugeordnet, der beispielsweise durch einen Schwimmer gebildet sein kann. Ganz besonders bevorzugt im Rahmen der Erfindung ist es weiterhin, wenn der Zwischenboden zur Ausbildung einer Rinne auf mindestens einer Seite im Bereich der Wannenwand in Richtung Wannenboden abgesenkt ist, da so die Möglichkeit geschaffen wird, dass die Matte in die Rinne eintaucht und zusätzlich zu der Wasserversorgung der Matte hoher Kapillarität durch den Docht auch die Matte unmittelbar sich durch das in der Rinne gespeicherte Wasser versorgen kann.

Im Hinblick auf eine angemessene Stabilität des Zwischenbodens für die Beladung mit Gefäßen hat es sich als günstig erwiesen, wenn der Bodentank mittig in der Wanne angeordnet ist mit einer der Hälfte der Wannenbreite angenäherten Tankbreite.

Im folgenden wird die Erfindung an einem in der Zeichnung dargestellten Ausführungsbeispiel näher erläutert; es zeigen:
- Fig. 1: eine perspektivische Darstellung einer Wanne ohne Platte, mit geöffnetem Bodentank,

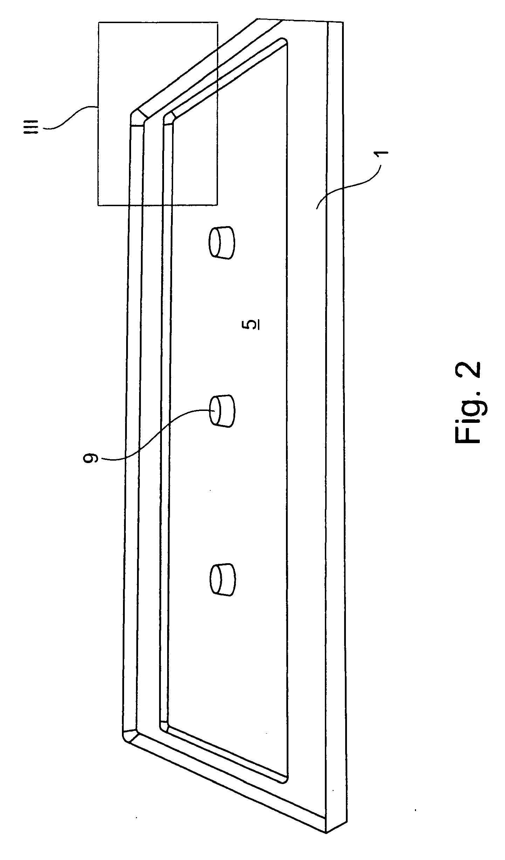

- Fig. 2: eine Darstellung der Wanne aus Fig. 1 aus anderer Perspektive, teilweise geschnitten dargestellt,
- Fig. 3: das Detail III aus Figur 2,

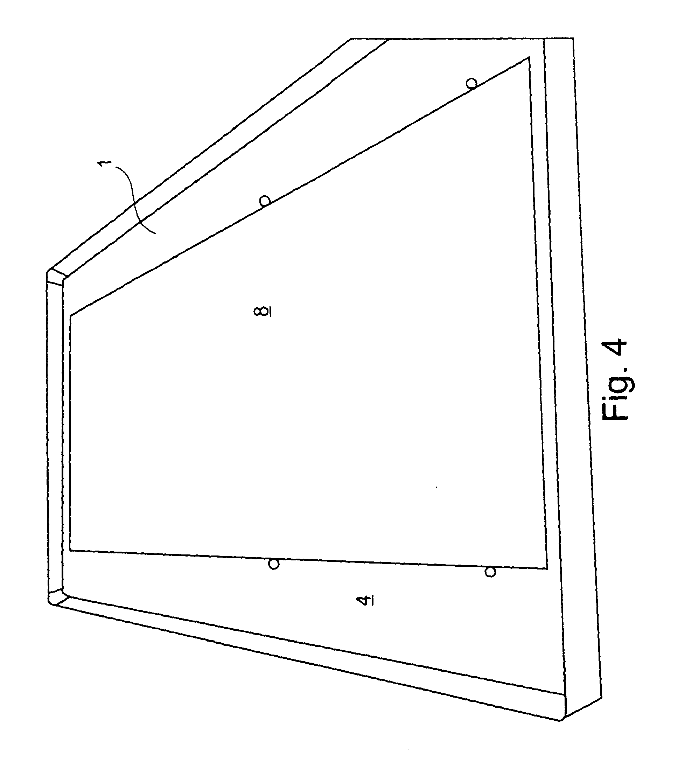

- Fig. 4: eine der Figur 1 entsprechende Darstellung mit aufgelegter Platte, und
- Fig. 5: eine perspektivische Darstellung einer Wanne mit teilweise geöffnetem Bodentank sowie mit Docht und Matte hoher Kapillarität.

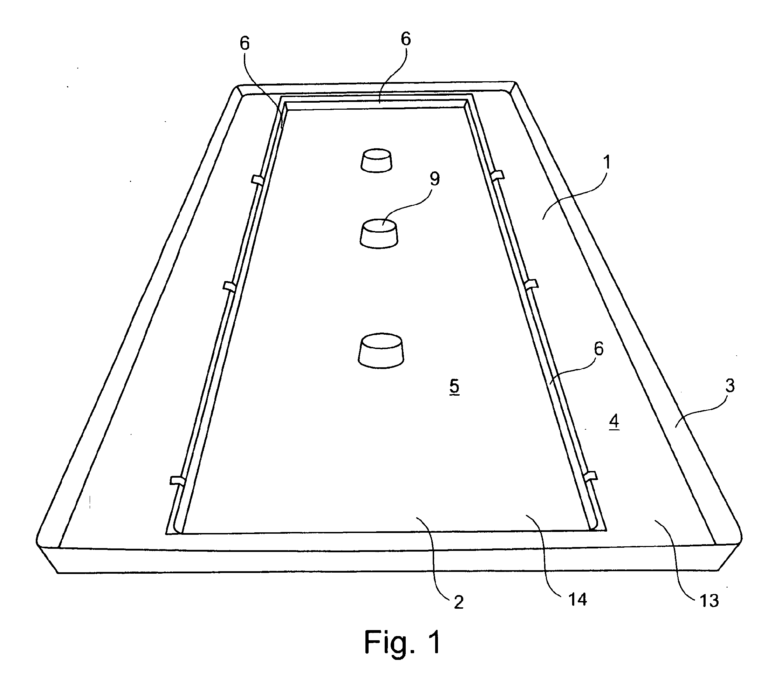

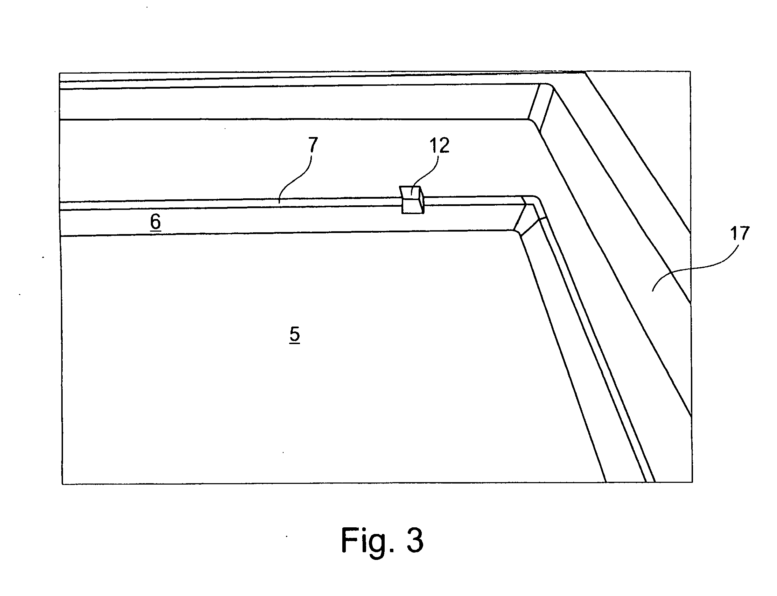

In der Figur 1 ist eine erfindungsgemäße Wanne 1 gezeigt, die zunächst die übliche Grundform einer Wanne 1 mit einem Wannenboden 2 und einem Wannenrand 3 besitzt. In dieser Wanne 1 ist ein Zwischenboden 4 sowie ein Bodentank ausgebildet, wobei der Bodentank 5 durch sich zum Zwischenboden 4 erstreckende Seitenwände 6 begrenzt ist. Die Figur 1 und insbesondere die Figur 3 lassen erkennen, dass in den Seitenwänden 6 eine Stufe 7 ausgebildet ist, wobei die Stufe 7 eine Höhe aufweist, die der Dicke einer Platte 8 entspricht, die zur Abdeckung des Bodentanks 5 auf diese Stufe 7 aufgelegt werden kann. Sofern die Wanne 1 und damit der in dieser ausgebildete Bodentank 5 eine große Erstreckung aufweisen, besteht die Möglichkeit, zur Abstützung der Platte 8 im Bodentank 5 mindestens eine Stützsäule 9 anzuordnen; in dem gezeigten Ausführungsbeispiel sind insgesamt drei Stützsäulen 9 vorhanden.

Die Platte 8, die auf die Stufen 7 zur Abdeckung des Bodentanks 5 aufgelegt werden kann, weist mindestens eine Öffnung 10 auf, durch die ein Docht 11 durchgeführt ist, der mit seinem einen Ende in den Bodentank 5 reicht und mit seinem anderen Ende auf der Platte 8 bzw. dem Zwischenboden 4 ausgebreitet ist. Um eine Flutung des Bodentanks 5 nicht nur durch die Öffnung 10 in der Platte 8 bewirken zu müssen, sind in den Seitenwänden 6 Flutungskanäle 12 ausgebildet.

Sowohl im Bodentank 5 als auch im Zwischenboden 4 sind Wasserabläufe 13, 14 vorhanden, die mittels eines Stopfens verschlossen werden können.

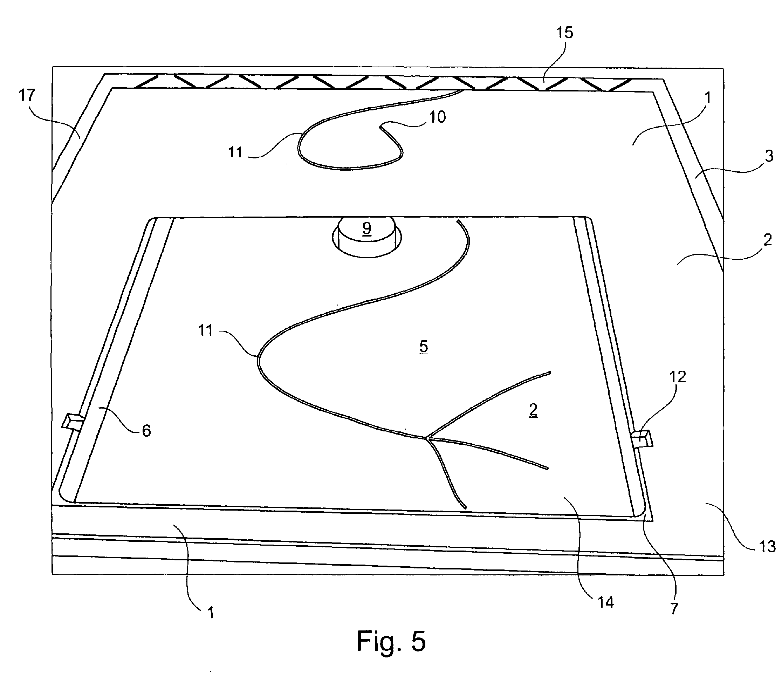

Figur 5 zeigt, dass auf den auf der Platte 8 ausgebreiteten Docht 11 eine Matte 15 hoher Kapillarität aufgebracht wird, die mit ihren Ränder 16 in einer Rinne 17 eintaucht, die randseitig in der Wanne 1 zwischen dem Zwischenboden 1 und der Wannenwand ausgebildet ist.

Mit einer derartigen Vorrichtung ist es in einfacher Weise möglich, beispielsweise in einem Verbrauchermarkt bereitgestellte Pflanzen ausreichend und nachhaltig mit Wasser zu versorgen, wobei zunächst in die aus der Figur 1 ersichtliche Wanne 1 ein Docht 11 in den Bodentank 5 gelegt und durch die Öffnung 10 der Platte 8 geführt wird, so dass die Platte 8 nachfolgend auf die Stufen 7 der Seitenwände 6 gelegt werden kann. Der Docht 11 wird sodann auf der Platte 8 und dem Zwischenboden 4 ausgebreitet und mit einer Matte 15 hoher Kapillarität bedeckt. Da die Platte 8 eine der Höhe der Stufe 7 entsprechende Dicke aufweist, ergibt sich eine plane Oberfläche in der Wanne 1, gebildet durch den Zwischenboden 4 und die Platte 8, so dass ohne Kippgefahr die Pflanzen mit ihren Gefäßen auf die Matte 15 gestellt werden können, sobald diese beispielsweise einem Verbrauchermarkt angeliefert werden. Die Anlieferung erfolgt in der Regel mit einem relativ trockenen Wurzelbereich, so dass zunächst die Wanne 1, in der Regel mittels eines Schlauches, gefüllt wird, wobei infolge der Flutungskanäle 12 und der Öffnung 10 eine Füllung sowohl des Bodentanks 5 als auch des Bereiches zwischen dem Zwischenboden 4 und dem oberen Wannenrand 3 erfolgt. Die Pflanzen stehen daher mit ihren Gefäßen auf der Matte 15 im Wasser und es erfolgt eine Staubewässerung, die eine zügige Durchfeuchtung des Wurzelbereiches ermöglicht, die mit einer Kapillarbewässerung in einer entsprechend kurzen Zeit nicht erreichbar ist.

Um aber Wurzelfäule zu vermeiden, wird diese Staubewässerung nach einer durch die Pflanzenart und Größe der Gefäße bestimmten Zeit beendet, indem das Wasser durch den ersten Wasserablauf 13 aus der Wanne 1 abgelassen wird. Da der erste Wasserablauf 13 sich auf erhöhtem Niveau im Zwischenboden 4 befindet, verbleibt das Wasser in dem Bodentank 5 und steht für die nachfolgende Bewässerung der Pflanzen in ihren Gefäßen durch die Kapillarbewässerung zur Verfügung. Die erfindungsgemäße Vorrichtung bietet damit die Möglichkeit, zwei Bewässerungsverfahren in vorteilhafter Weise zu kombinieren, nämlich zunächst für die schnelle Versorgung der Pflanzen nach deren Anlieferung die Anstaubewässerung einzusetzen und nach erfolgter initialer Versorgung auf die Kapillarbewässerung über zu wechseln, wobei dies durch angelerntes Personal möglich ist.

### Bezugszeichenliste

- 1: Wanne
- 2: Wannenboden
- 3: Wannenrand
- 4: Zwischenboden
- 5: Bodentank
- 6: Seitenwände
- 7: Stufe
- 8: Platte
- 9: Stützsäule
- 10: Öffnung
- 11: Docht
- 12: Flutungskanal
- 13: erster Wasserablauf
- 14: zweiter Wasserablauf
- 15: Matte
- 16: Rand
- 17: Rinne

## Patentansprüche

1. Verfahren zur Bewässerung mindestens einer in einem Gefäß bereit gestellten Pflanze, bei dem in einen Bodentank (5) mindestens ein Docht (11) gelegt und durch mindestens eine Öffnung (10) einer den Bodentank (5) abdeckenden Platte (8) nach oben auf die Platte (8) geführt und dort ausgelegt wird, bei dem auf den Docht (11) und die Platte (8) eine Matte (15) großer Kapillarität gelegt wird und auf die Matte (15) die zu bewässernde Pflanze gestellt wird, **dadurch gekennzeichnet, dass** der Bodentank (5) einer Wanne (1) zugeordnet ist, welche einschließlich des Bodentanks (5) zur anfänglichen Anstaubewässerung mit Wasser gefüllt und nach einer Zeitdauer zur Durchfeuchtung durch einen verschließbaren ersten Wasserablauf (13) außerhalb des Bodentanks (5) für den Übergang zur Kapillarbewässerung entleert wird.

2. Verfahren nach Anspruch 1, **dadurch gekennzeichnet, dass** nach der Entleerung des Wassers durch den ersten Wasserablauf (13) dem im Bodentank (5) befindlichen Wasser Dünger zugesetzt wird.

3. Verfahren nach Anspruch 1, **dadurch gekennzeichnet, dass** das durch Kapillarkräfte aus dem Bodentank (5) gesaugte Wasser ohne eine erneute Befüllung der Wanne (1) oberhalb der Platte (8) ersetzt wird.

4. Vorrichtung zur Durchführung des Verfahrens nach Anspruch 1 mit einer einen Bodentank (5) abdeckenden Platte (8) mit mindestens einer Öffnung (10), durch die ein Docht (11) in den Bodentank (5) geführt ist, der mindestens auf der Platte (8) ausgelegt und mit einer Matte (15) großer Kapillarität bedeckt ist, **dadurch gekennzeichnet, dass** der Bodentank (5) in einer einen Wannenboden (2) und einen Wannenrand (3) aufweisenden Wanne (1) mit einem den Bodentank (5) begrenzenden Zwischenboden (4) ausgebildet ist, dass die Platte (8) auf den Zwischenboden (4) aufgelegt und der Docht (11) ggfs. auf dem Zwischenboden (4) ausgelegt ist, und dass zur Entwässerung der Wanne (1) oberhalb des Zwischenbodens (4) ein verschließbarer erster Wasserablauf (13) vorgesehen ist.

5. Vorrichtung nach Anspruch 4, **dadurch gekennzeichnet, dass** der Bodentank (5) zum Zwischenboden (4) durch Seitenwände (6) begrenzt ist.

6. Vorrichtung nach Anspruch 5, **dadurch gekennzeichnet, dass** der erste Wasserablauf (13) im Zwischenboden (4) ausgebildet ist.

7. Vorrichtung nach einem der Anspruch 5 oder 6, **dadurch gekennzeichnet, dass** für einen bündigen Übergang von der Platte (8) zu dem Zwischenboden (4) die Seitenwände (6) eine der Dicke der Platte (8) entsprechende Stufe (7) aufweisen.

8. Vorrichtung nach einem der Ansprüche 4 bis 7, **dadurch gekennzeichnet, dass** den Seitenwänden (6) mindestens ein Flutungskanal (12) für die Befüllung des Bodentanks (5) zugeordnet ist.

9. Vorrichtung nach einem der Ansprüche 4 bis 8, **dadurch gekennzeichnet, dass** im Bodentank (5) mindestens eine Stützsäule (9) angeordnet ist.

10. Vorrichtung nach einem der Ansprüche 4 bis 9, **dadurch gekennzeichnet, dass** im Bodentank (5) ein verschließbarer zweiter Wasserablauf (14) ausgebildet ist.

11. Vorrichtung nach einem der Ansprüche 4 bis 10, **dadurch gekennzeichnet, dass** dem Bodentank (5) ein Wasserstandsanzeiger zugeordnet ist.

12. Vorrichtung nach einem der Ansprüche 4 bis 11, **dadurch gekennzeichnet, dass** der Zwischenboden (4) zur Ausbildung einer Rinne (17) auf mindestens einer Seite im Bereich der Wannenwand in Richtung Wannenboden (2) abgesenkt ist.

13. Vorrichtung nach Anspruch 12, **dadurch gekennzeichnet, dass** die Matte (15) in die Rinne (17) eintaucht.

14. Vorrichtung nach einem der Ansprüche 4 bis 13, **dadurch gekennzeichnet, dass** Bodentank (5) mittig in der Wanne (1) angeordnet ist mit einer der Hälfte der Wannenbreite angenäherten Tankbreite.

## Claims

1. A method of watering at least one plant in a container, which at least one wick (11) is placed in a bottom tank (5) and passed upwardly through at least one opening (10) in a plate (8) covering the bottom tank (5) on to the plate (8) and there laid out, a mat (15) of high capillarity is laid on the wick (11) and the plate (8) and the plant to be watered is placed on the mat (15), **characterised in that** the bottom tank (5) is associated with a pan (1) which inclusive of the bottom tank (5) is filled with water for initial irrigation watering and after a period for thorough moistening is emptied through a closable first water discharge (13) outside the bottom tank (5) for the transition to capillary watering.

2. A method according to claim 1 **characterised in that** after emptying of the water through the first water discharge (13) fertiliser is added to the water in the bottom tank (5).

3. A method according to claim 1 **characterised in that** the water sucked out of the bottom tank (5) due to capillary forces is replaced without renewed filling of the pan (1) above the plate (8).

4. Apparatus for carrying out the method according to claim 1 comprising a plate (8) covering a bottom tank (5), with at least one opening (10) through which a wick (11) is passed into the bottom tank (5), which wick is laid out at least on the plate (8) and covered with a mat (15) of high capillarity, **characterised in that** the bottom tank (5) is provided in a pan (1) which has a pan bottom (2) and a pan edge (3) and which has an intermediate floor (4) delimiting the bottom tank (5), the plate (8) is laid on the intermediate floor (4) and the wick (11) is optionally laid out on the intermediate floor (4), and there is provided a closable first water discharge (13) for removal of water from the pan (1) above the intermediate floor (4).

5. Apparatus according to claim 4 **characterised in that** the bottom tank (5) is delimited by side walls (6) in relation to the intermediate floor (4).

6. Apparatus according to claim 5 **characterised in that** the first water discharge (13) is provided in the intermediate floor (4).

7. Apparatus according to one of claims 5 and 6 **characterised in that** the side walls (6) have a step (7) corresponding to the thickness of the plate (8) for a flush transition from the plate (8) to the intermediate floor (4).

8. Apparatus according to one of claims 4 to 7 **characterised in that** at least one flooding passage (12) for filling the bottom tank (5) is associated with the side walls (6).

9. Apparatus according to one of claims 4 to 8 **characterised in that** at least one support column (9) is arranged in the bottom tank (5)

10. Apparatus according to one of claims 4 to 9 **characterised in that** a closable second water discharge (14) is provided in the bottom tank (5).

11. Apparatus according to one of claims 4 to 10 **characterised in that** a water level indicator is associated with the bottom tank (5).

12. Apparatus according to one of claims 4 to 11 **characterised in that** the intermediate floor (4) is lowered in the direction of the pan bottom (2) to provide a channel (17) on at least one side in the region of the pan wall.

13. Apparatus according to claim 12 **characterised in that** the mat (15) dips into the channel (17).

14. Apparatus according to one of claims 4 to 13 **characterised in that** the bottom tank (5) is arranged centrally In the pan (1) with h a tank width approximating to half the pan width.

## Revendications

1. Procédé d'arrosage d'au moins une plante placée dans un récipient, dans lequel au moins une mèche (11) est posée dans un réservoir de fond (5) et est conduite, à travers au moins une ouverture (10) d'une plaque (8) recouvrant le réservoir de fond (5), vers le haut sur la plaque (8) et est étalée sur celle-ci, dans lequel une natte (15) de grande capillarité est posée sur la mèche (11) et sur la plaque (8), et la plante à arroser est posée sur la natte (15), **caractérisé en ce que** le réservoir de fond (5) est associé à un bac (1), lequel est rempli, réservoir de fond (5) compris, d'eau pour la subirrigation initiale et, après une période de mouillage, est vidé, à travers une première sortie d'eau refermable (13), à l'extérieur du réservoir de fond (5) pour le passage à l'arrosage par capillarité.

2. Procédé selon la revendication 1, **caractérisé en ce qu'**après la vidange de l'eau à travers la première sortie d'eau (13), de l'engrais est ajouté à l'eau se trouvant dans le réservoir de fond (5).

3. Procédé selon la revendication 1, **caractérisé en ce que** l'eau aspirée du réservoir de fond (5) sous l'effet des forces capillaires est remplacée sans que le bac (1) soit de nouveau rempli au-dessus de la plaque (8).

4. Dispositif pour réaliser le procédé selon la revendication 1, avec une plaque (8) recouvrant un réservoir de fond (5) et comportant au moins une ouverture (10) à travers laquelle une mèche (11) est conduite dans le réservoir de fond (5), laquelle est au moins étalée sur la plaque (8) et recouverte d'une natte (15) de grande capillarité, **caractérisé en ce que** le réservoir de fond (5) est réalisé dans un bac (1) comportant un fond de bac (2) et un bord de bac (3) ainsi qu'un fond intermédiaire (4) délimitant le réservoir de fond (5), **en ce que** la plaque (8) est posée sur le fond intermédiaire (4) et la mèche est étalée le cas échéant sur le fond intermédiaire (4), et **en ce qu'**une première sortie d'eau refermable (13) est prévue au-dessus du fond intermédiaire (4) pour vider le bac (1).

5. Dispositif selon la revendication 4, **caractérisé en ce que** le réservoir de fond (5) est délimité par rapport au fond intermédiaire (4) par des parois latérales (6).

6. Dispositif selon la revendication 5, **caractérisé en ce que** la première sortie d'eau (13) est ménagée dans le fond intermédiaire (4).

7. Dispositif selon une des revendications 5 ou 6, **caractérisé en ce que** les parois latérales (6) comportent un gradin (7) correspondant à l'épaisseur de la plaque (8) pour une transition de niveau entre la plaque (8) et le fond intermédiaire (4).

8. Dispositif selon une des revendications 4 à 7, **caractérisé en ce qu'**au moins un canal de mise en eau (12) pour le remplissage du réservoir de fond (5) est associé aux parois latérales (6).

9. Dispositif selon une des revendications 4 à 8, **caractérisé en ce qu'**au moins un plot de soutien (9) est disposé dans le réservoir de fond (5).

10. Dispositif selon une des revendications 4 à 9, **caractérisé en ce qu'**une deuxième sortie d'eau refermable (14) est ménagée dans le réservoir de fond (5).

11. Dispositif selon une des revendications 4 à 10, **caractérisé en ce qu'**un indicateur de niveau d'eau est associé au réservoir de fond (5).

12. Dispositif selon une des revendications 4 à 11, **caractérisé en ce que** le fond intermédiaire (4) est abaissé en direction du fond de bac (2) sur au moins un côté dans la zone de la paroi de bac pour former une rigole (17).

13. Dispositif selon la revendication 12, **caractérisé en ce que** la natte (15) plonge dans la rigole (17).

14. Dispositif selon une des revendications 4 à 13, **caractérisé en ce que** le réservoir de fond (5) est disposé au centre du bac (1) avec une largeur de réservoir proche de la moitié de la largeur de bac.
